# DEMANDE DE BREVET EUROPEEN

(11) **EP 2 532 261 A2**
(43) Date de publication de la demande: **12.12.2012**
(21) Numéro de dépôt: 12002484.9
(22) Date de dépôt: 05.04.2012
(51) Int. Cl.: A43B 5/04, A43B 23/17, B29D 35/14

(54) **Chaussure à tige améliorée**

(30) Priorité: 09.06.2011 FR 1101775
(71) Demandeur: Salomon S.A.S., 74370 Metz-Tessy (FR)
(72) Inventeur: Berthet, Bruno, 74600 Seynod (FR); Arbez, Emilien, 39220 Bois d' Amont (FR)

(57) **Abrégé**

Chaussure (1) comprenant un semelage (2) et une tige (3), la tige (3) comprenant une enveloppe souple (4), la chaussure (1) s'étendant en longueur depuis une extrémité arrière (5) jusqu'à une extrémité avant (6), en largeur entre un côté latéral (7) et un côté médial (8), et en hauteur depuis le semelage (2) jusqu'à une extrémité supérieure (9), la chaussure (1) comprenant un contrefort (15) situé au niveau de l'extrémité arrière (5).

La chaussure comprend un renfort (33) qui se superpose en partie au moins au contrefort (15).

## Description

L'invention se rapporte à une chaussure, notamment de sport, et concerne plus particulièrement une chaussure utilisée dans des domaines tels que le ski de fond ou de télémark, la marche ou la course à plat ou en montagne, ou encore le surf sur neige, la raquette à neige, le patin à roues, la planche à roues, le cyclisme, un sport de balle, ou autre.

Chaque chaussure comprend, pour une application visée, un semelage externe et une tige, la tige comprenant une enveloppe souple. Cela donne une certaine liberté de mouvement du pied par rapport au bas de jambe d'un utilisateur. Ainsi ce dernier est à même de pratiquer son activité. Il est bien entendu souhaitable que la chaussure soit adaptée à l'utilisateur. Cela signifie qu'elle doit présenter des caractéristiques en rapport avec l'utilisateur, notamment avec son niveau de pratique, son style de pratique, son poids, ou autre.

Par exemple, dans le domaine du ski de fond, on considèrera la conduite adoptée. Il peut s'agir de celle des pas alternatifs, avec les skis en ligne, ou bien de celle des pas de patineur, avec les skis orientés latéralement par rapport à la direction de déplacement de l'utilisateur. La souplesse requise pour la tige n'est pas la même selon que la conduite est faite en pas alternatifs ou de patineur. De plus, pour chaque type de conduite, différents utilisateurs présentent souvent des savoir-faire différents, ainsi que des poids différents. En conséquence, même si une paire de chaussures est sélectionnée pour répondre au mieux aux besoins de l'utilisateur, il arrive qu'elle lui convienne bien sans toutefois lui convenir parfaitement.

Plus précisément dans le domaine du ski de fond il est connu de fabriquer des chaussures à tige souple adaptées à la conduite en pas alternatifs, et des chaussures adaptées à la conduite en pas de patineur.

Pour la conduite en pas alternatifs, une chaussure à tige souple est munie d'un contrefort talon bas, situé au niveau de l'extrémité arrière et destiné à maintenir le talon du pied dans la tige, notamment transversalement. Le contrefort contourne le talon du pied sous l'articulation de la cheville. Cette chaussure est bien adaptée à la conduite en pas alternatifs, car elle autorise des flexions libres, ou assez libres, du bas de jambe. Cependant une chaussure pour ce style de conduite ne satisfait pas complètement certains utilisateurs pour les raisons évoquées avant. Ainsi il peut arriver qu'un utilisateur n'arrive pas à transmettre l'intégralité de l'énergie liée aux impulsions, ou qu'il ne perçoive pas la totalité des informations sensorielles issues des skis qu'il conduit. En d'autres termes, même s'il est généralement bon, le rendement énergétique lié à la conduite n'est pas optimal.

Dans le cas d'une conduite en pas de patineur, une chaussure à tige souple est munie d'un contrefort talon haut, situé au niveau de l'extrémité arrière et destiné à maintenir non seulement le talon du pied dans la tige, notamment transversalement, mais aussi la cheville proprement dite, voire la partie basse du bas de jambe, là encore notamment transversalement. Ainsi le contrefort contourne le talon du pied sous l'articulation de la cheville, et se prolonge à hauteur de la cheville, voire au-dessus, du côté latéral et/ou du côté médial de la chaussure. Cette prolongation fournit un support transversal à la cheville, voire au bas de jambe, pour transmettre des impulsions de conduite en direction transversale. Cette chaussure est donc adaptée à la conduite en pas de patineur. Cependant là aussi une chaussure pour ce style de conduite ne satisfait pas complètement certains utilisateurs. Il peut arriver qu'un utilisateur ne réussisse pas à transmettre l'intégralité de l'énergie liée aux impulsions, ou qu'il ne perçoive pas la totalité des informations sensorielles issues des skis qu'il conduit. Le rendement énergétique lié à la conduite n'est pas optimal.

Il arrive aussi que le contrefort soit source d'inconfort, dans le sens où il gêne la transmission d'impulsions de conduite ou le passage d'informations sensorielles.

Par rapport à cela l'invention cherche d'une manière générale à améliorer une chaussure qui comprend un semelage externe, une tige munie d'une enveloppe souple, et un contrefort talon situé au niveau de l'extrémité arrière.

Un but de l'invention est de faire en sorte qu'une chaussure sélectionnée pour un utilisateur soit celle qui lui convient le mieux, en prenant en compte son niveau de pratique, son style de pratique, son poids, ou autre.

Un autre but de l'invention est de faire en sorte que l'utilisateur optimise son rendement d'utilisation. Dans le cas du ski de fond, la chaussure doit optimiser la transmission de l'énergie liée aux impulsions de conduite, ou bien restituer fidèlement les informations sensorielles issues du ski. Il s'agit en fait d'optimiser le rendement de conduite.

Un autre but de l'invention est de réduire, voire de supprimer totalement, toute gêne ou inconfort qui pourrait survenir pendant la conduite.

Un but encore de l'invention est de réduire les coûts de fabrication d'une chaussure.

Pour ce faire l'invention propose une chaussure comprenant un semelage et une tige, la tige comprenant une enveloppe souple, la chaussure s'étendant en longueur depuis une extrémité arrière jusqu'à une extrémité avant, en largeur entre un côté latéral et un côté médial, et en hauteur depuis le semelage jusqu'à une extrémité supérieure, la chaussure comprenant un contrefort situé au niveau de l'extrémité arrière.

La chaussure selon l'invention est caractérisée par le fait qu'elle comprend un renfort qui se superpose en partie au moins au contrefort.

Le renfort modifie les propriétés physiques ou mécaniques de la tige là où il s'étend. Si le renfort s'étend seulement au niveau du contrefort, alors les propriétés de la tige sont ajustées au niveau du seul contrefort. Si le renfort s'étend à la fois au niveau du contrefort et au niveau d'une portion de la tige attenante au contrefort, alors les propriétés physiques ou mécaniques de la tige sont modifiées au niveau du contrefort et aussi au niveau de la portion de tige attenante. Cette portion, située entre le contrefort et l'extrémité supérieure, est contigüe au contrefort.

Le renfort est réalisé avec un ou plusieurs matériaux destinés à conférer à la tige les propriétés voulues, là où il est implanté. A titre d'exemple le renfort comprend une matière synthétique, telle qu'une matière plastique. Le renfort est fait en fonction des caractéristiques que l'on veut donner à la chaussure, pour un profil d'utilisateur. En d'autres termes, le renfort est prévu pour que la chaussure présente des caractéristiques en rapport avec l'utilisateur, notamment avec son niveau de pratique, son style de pratique, son poids, ou autre.

Cela permet une meilleure transmission de l'énergie liée aux impulsions de conduite, ainsi qu'une meilleure perception des informations sensorielles. En d'autres termes le rendement de transmission ou de perception est amélioré.

Il en résulte avantageusement qu'une chaussure sélectionnée pour un utilisateur lui convient mieux. Il faut comprendre par là qu'il s'agit de la chaussure définie par ses caractéristiques physiques et mécaniques. En effet, le renfort a permis de prendre en compte le niveau de pratique de l'utilisateur, ou son style de pratique, ainsi que son poids, ou autre.

Un autre avantage apporté par la chaussure de l'invention est celui d'un meilleur rendement d'utilisation. La fatigue de l'utilisateur est réduite car il dépense moins d'énergie pour une impulsion d'intensité donnée. La conduite d'un ski est plus précise car il perçoit mieux les informations sensorielles.

Un autre avantage est celui d'un confort accru. En effet l'ajustement des caractéristiques de la tige, par la mise en place du renfort, adapte mieux la chaussure aux besoins de l'utilisateur.

Un autre avantage est lié au procédé de fabrication de la chaussure selon l'invention. En effet, il est possible de fabriquer différentes chaussures, c'est-à-dire des chaussures ayant des propriétés physiques ou mécaniques différentes dans la région du contrefort, soit en choisissant de ne pas utiliser de renfort, soit en utilisant un renfort. Dans ce deuxième cas, pendant la fabrication, il est possible de sélectionner un renfort donné, parmi une série de plusieurs, pour obtenir une chaussure aux caractéristiques voulues. Le gain provient du fait qu'il est moins coûteux de faire des renforts différents, prévus pour coopérer avec un contrefort donné, lequel est commun à toutes les chaussures, plutôt que de faire des contreforts différents pour les différentes sortes de chaussures.

L'invention concerne également un procédé de fabrication d'une chaussure qui comprend un semelage et une tige, la tige comprenant une enveloppe souple, la chaussure comprenant un contrefort.

Le procédé de fabrication selon l'invention est caractérisé par le fait qu'une étape de référence du procédé consiste à mouler le contrefort à l'aide d'un moule qui comprend une base avec une forme qui délimite la face intérieure du contrefort, ainsi qu'un premier couvercle qui délimite la face extérieure du contrefort, et par le fait qu'une étape successive à l'étape de référence consiste à mouler un renfort au contact du contrefort, à l'aide d'un moule qui comprend la base qui porte le contrefort, ainsi qu'un deuxième couvercle substitué au premier, le deuxième couvercle laissant la place pour ajouter le renfort.

D'autres caractéristiques et avantages de l'invention seront mieux compris à l'aide de la description qui va suivre, en regard du dessin annexé illustrant, selon une forme de réalisation non limitative, comment l'invention peut être réalisée, et dans lequel :
- la figure 1 est une vue de côté d'une chaussure pour la forme de réalisation proposée, dans une configuration où le renfort n'est pas en place,
- la figure 2 est une vue en perspective arrière du contrefort de la chaussure, considéré en tant que tel,
- la figure 3 est une vue de dessus du contrefort de la chaussure, considéré en tant que tel,
- la figure 4 est une vue en perspective arrière du contrefort et du renfort, avant que l'un soit solidarisé à l'autre,
- la figure 5 est une vue en perspective arrière du contrefort et du renfort, l'un étant solidarisé à l'autre,
- la figure 6 est une vue en perspective arrière qui à trait à la mise en place d'un collier sur le renfort,
- la figure 7 est une vue de côté de la chaussure, dans une configuration où le renfort et le collier sont en place.

La forme de réalisation qui va être décrite après concerne plus spécialement des chaussures pour la pratique du ski de fond, ou de télémark. Cependant l'invention s'applique à d'autres domaines, tels que ceux évoqués avant.

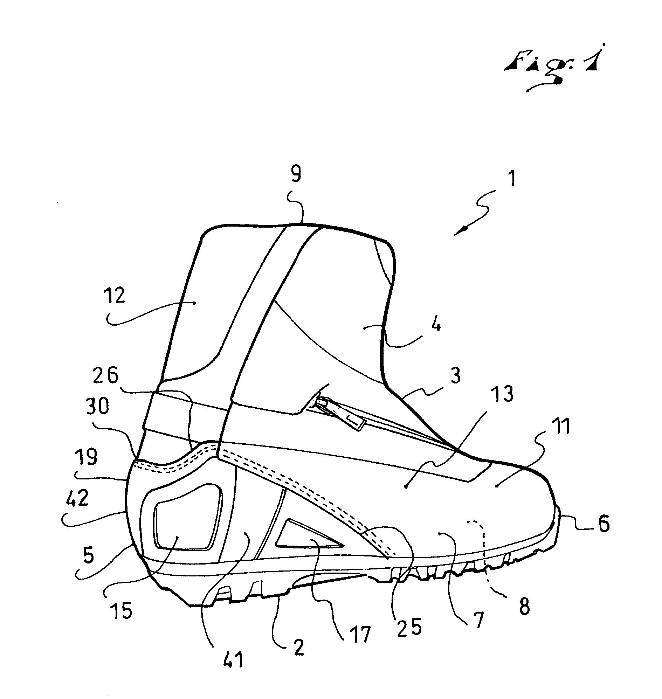

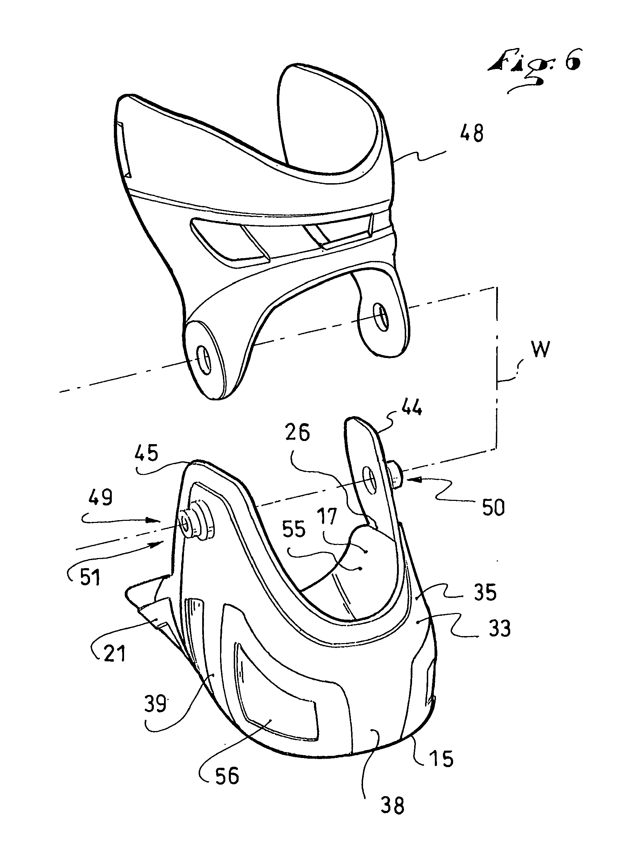

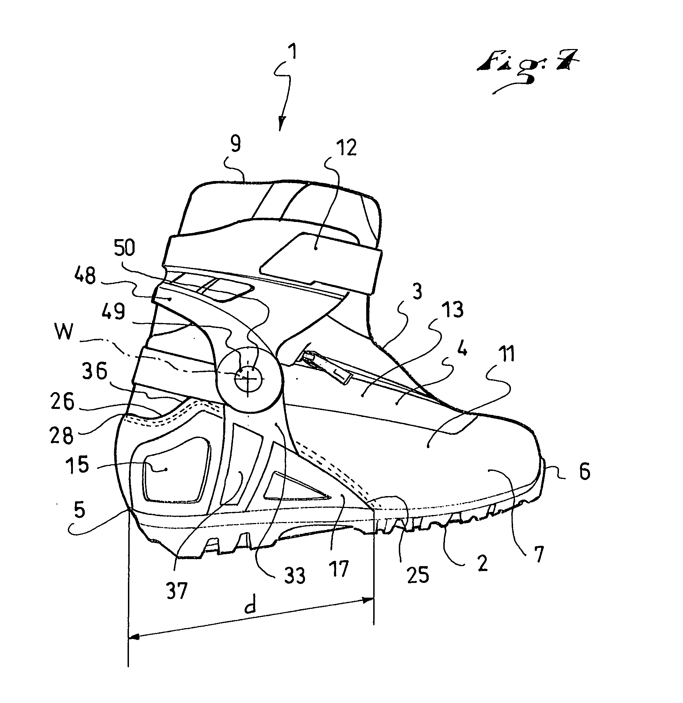

La forme de réalisation proposée est donc décrite à l'aide des figures 1 à 7.

Comme le montre par exemple la figure 1, une chaussure de ski de fond 1 est prévue pour accueillir le pied de l'utilisateur.

De manière connue, la chaussure 1 comprend un semelage externe 2 et une tige 3, laquelle comprend une enveloppe souple 4. Cette dernière 4 est apte à se déformer, par exemple en flexion, pour suivre les mouvements du pied par rapport au bas de jambe. Cela notamment en cas de flexion avant ou arrière, ou d'inclinaison transversale. La chaussure 1 s'étend en longueur depuis une extrémité arrière ou talon 5 jusqu'à une extrémité avant ou pointe 6, en largeur entre un côté latéral 7 et un côté médial 8, et en hauteur depuis le semelage externe 2 jusqu'à une extrémité supérieure 9.

Telle que représentée la tige 3 comprend une portion basse 11, prévue pour couvrir le pied, ainsi qu'une portion haute 12, prévue pour entourer la cheville et, éventuellement, une partie du bas de jambe.

Selon la forme de réalisation décrite l'enveloppe souple 4 est une partie externe de la tige 3, partie qui délimite, de ce fait, une surface externe 13 de la chaussure. Cela n'empêche pas de munir la tige 3 d'autres parties, non représentées, comme une enveloppe interne, un ou plusieurs dispositifs de serrage réversible de l'une ou de toutes les enveloppes, ou autre.

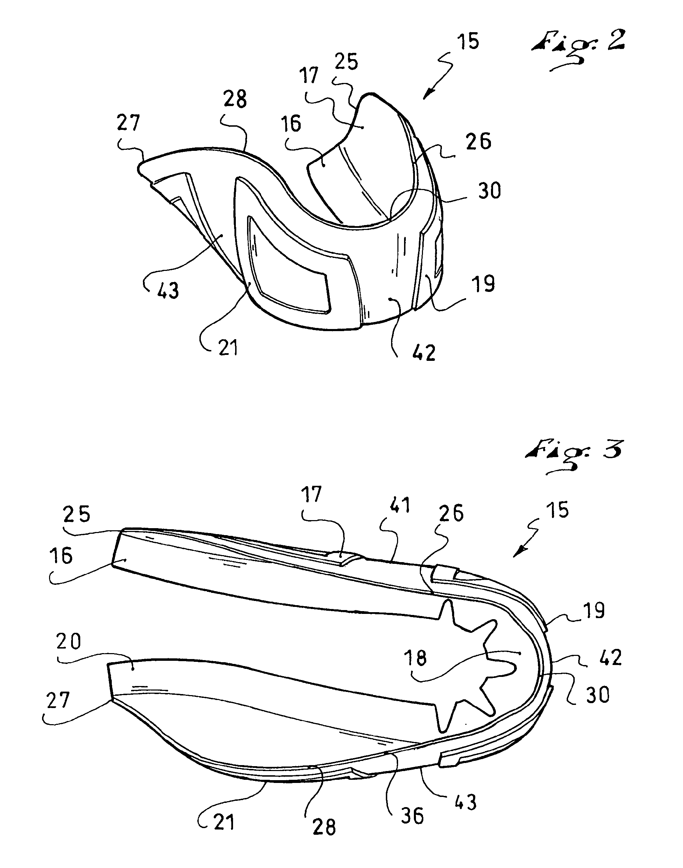

Comme on peut le voir non seulement sur la figure 1, mais aussi sur les figures 2 et 3, la chaussure 1 comprend un contrefort talon 15 situé au niveau de son extrémité arrière 5. Le contrefort 15 comprend lui-même une base latérale 16 et une paroi latérale 17, une base arrière 18 et une paroi arrière 19, ainsi qu'une base médiale 20 et une paroi médiale 21.

Chaque base 16, 18, 20 est orientée parallèlement au semelage externe 2, et disposée à la jonction de ce dernier et de l'enveloppe souple 4. On pourrait alternativement prévoir l'insertion des bases 16, 18, 20 entre deux couches du semelage 2. Dans tous les cas les bases 16, 18, 20 s'étendent à l'intérieur de la structure de la chaussure. Les parois 17, 19 et 21, quant à elles, couvrent l'enveloppe souple 4 dans la région de l'extrémité arrière 5. Cela lui donne localement la rigidité nécessaire au maintien du talon du pied, notamment selon une direction transversale de la chaussure. Cette direction s'étend du côté latéral 7 vers le côté médial 8.

De manière non limitative, les parois latérale 17, arrière 19 et médiale 21 se prolongent les unes les autres pour former une partie continue au niveau de la tige 3. C'est cette partie qui couvre l'enveloppe souple 4. Plus largement, les parois latérale 17, arrière 19 et médiale 21, ainsi que les bases latérale 16, arrière 18 et médiale 20, forment ensemble une pièce monobloc. Cela facilite la fabrication du contrefort 15, et sa mise en place dans la structure de la chaussure. Le contrefort 15 est par exemple constitué par une matière synthétique moulée, telle qu'un polyuréthane, un polyamide, ou tout matériau équivalent.

La paroi latérale 17 s'étend longitudinalement depuis la paroi arrière 19 jusqu'à une extrémité avant 25, et en hauteur depuis la base latérale 16 jusqu'à un sommet 26. Dans le même esprit la paroi médiale 21 s'étend longitudinalement depuis la paroi arrière 19 jusqu'à une extrémité avant 27, et en hauteur depuis la base médiale 20 jusqu'à un sommet 28. Par corollaire, la paroi arrière 19 s'étend en largeur depuis la paroi latérale 17 jusqu'à la paroi médiale 21, et en hauteur depuis la base arrière 18 jusqu'à un sommet 30. On observe que les sommets 26, 28, 30 des parois 17, 21, 19 sont situés à une distance du semelage 2 telle qu'ils sont en regard du talon du pied, légèrement sous la cheville. Cela attribue à la tige 3 une grande liberté de flexion. Autrement dit les flexions du bas de jambe, vers l'avant ou vers l'arrière, ainsi que les inclinaisons transversales, sont facilitées. Cette structure de chaussure est bien adaptée à la conduite de skis selon la technique des pas alternatifs.

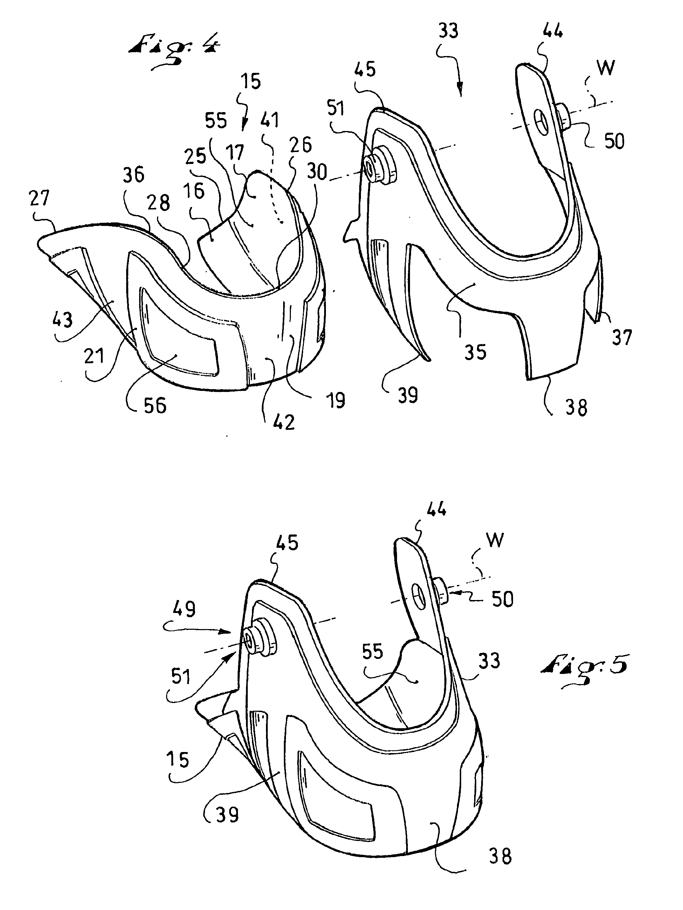

Selon l'invention, comme on le perçoit notamment à l'aide des figures 4 à 7, la chaussure 1 comprend un renfort 33 qui se superpose en partie au moins au contrefort 15. Le renfort 33 modifie les propriétés physiques ou mécaniques de la tige là où il s'étend, c'est-à-dire soit au niveau du contrefort 15 seul, soit au niveau du contrefort et d'une partie de l'enveloppe souple 4. Dans tous les cas le renfort 33 couvre en partie le contrefort 15. Il est possible de sélectionner le matériau constitutif de renfort 33 pour ajuster la flexion de la tige 3, dans un sens de réduction. Il est aussi possible de choisir l'étendue du renfort pour sélectionner des subdivisions de la tige dont l'aptitude à la flexion doit être réduite. Au final, en fonction des choix opérés, une chaussure est mieux à même de correspondre aux besoins spécifiques d'un utilisateur. On pourra par exemple élargir le contenu d'une gamme de chaussures en magasin, et de ce fait faciliter la sélection d'une paire de chaussures.

Le renfort 33 est par exemple constitué par une matière synthétique moulée, telle qu'un polyuréthane, un polyamide, ou tout matériau équivalent. Cela facilite son intégration au reste de la chaussure, comme on le verra mieux par la suite.

Selon la forme de réalisation décrite, de manière non limitative, le renfort 33 comprend un arceau 35 qui s'étend le long du côté latéral 7, de l'extrémité arrière 5 et du côté médial 8 de la chaussure 1, au niveau d'une extrémité supérieure 36 du contrefort 15. Cette extrémité 36 comprend en fait une partie au moins des sommets 26, 28, 30 des parois latérale 17, médiale 21, et arrière 19. L'arceau 35 s'étend en partie en regard strictement du contrefort 15, et en partie en regard strictement de l'enveloppe souple 4. On peut dire que le renfort 33 s'étend vers l'extrémité supérieure 9 de la chaussure 1, au-delà de l'extrémité supérieure 36 du contrefort. C'est pourquoi il 35 rigidifie ici à la fois le contrefort 13 et l'enveloppe 4, au niveau de l'extrémité arrière 5 de la chaussure 1. Cela augmente la tenue du talon du pied, notamment en direction transversale. En conséquence le renfort 33 permet une conduite plus précise.

Toujours selon la forme de réalisation proposée, le renfort 33 comprend une extension basse 37, 38, 39 qui prolonge l'arceau 35 vers le semelage externe 2. L'idée est d'augmenter la résistance à la déformation du contrefort 15, là où l'extension s'étend. Ainsi, par exemple, le renfort 33 comprend une patte latérale 37, une patte arrière 38 et une patte médiale 39, les pattes latérale 37, arrière 38 et médiale 39 prolongeant l'arceau 35 vers le semelage externe 2. En conséquence l'augmentation de la résistance mécanique du contrefort 15 se répartit à sa périphérie, à savoir au niveau de la paroi latérale 17, de la paroi arrière 19 et de la paroi médiale 21. Cet agencement rend homogène l'influence du renfort 33 sur le contrefort 15, dans le sens où elle est répartie assez régulièrement, et non localisée. En conséquence la tenue du talon du pied est homogène.

Pour faciliter sa mise en place sur le renfort 33, le contrefort 15 présente une rainure latérale 41 dans laquelle prend place la patte latérale 37, une rainure arrière 42 dans laquelle prend place la patte arrière 38, et une rainure médiale 43 dans laquelle prend place la patte médiale 39. En fait les pattes 37, 38, 39 du renfort 33 s'emboîtent dans les rainures 41, 42, 43 du contrefort 15, pour une meilleure solidarisation de l'un avec l'autre. En effet, cet agencement augmente la tenue du renfort 33 sur le contrefort 15, par effet de coincement des pattes dans les rainures. De manière générale le contrefort 15 présente au moins un évidement 41, 42, 43 apte à recevoir le renfort 33.

Selon la forme de réalisation proposée, au moins une patte 37, 38, 39 s'étend depuis l'arceau 35 jusqu'au semelage 2. En fait, ici les trois pattes s'étendent depuis l'arceau 35 jusqu'au semelage 2. Cette disposition permet une transmission plus précise des sollicitations ou des informations sensorielles qui transitent au niveau du contrefort 15, dans le sens de la hauteur de la chaussure.

Le renfort 33 comprend une extension latérale haute 44 et une extension médiale haute 45, les extensions 44, 45 longeant l'enveloppe souple 4 de la tige 3 vers l'extrémité supérieure 9. Les extensions 44, 45 servent à limiter les inclinaisons transversales de la tige 3 au niveau de la cheville de l'utilisateur. Il s'ensuit une meilleure protection contre les traumatismes, induits parfois par torsion ou inclinaison excessive du bas de jambe par rapport au pied.

Ici la chaussure 1 comprend un collier 48 relié au renfort 33, de manière réversible, par un moyen de solidarisation 49. Le collier 48 prolonge les extensions 44, 45 vers l'extrémité supérieure 9 et, de ce fait limite fortement, voire empêche, les inclinaisons transversales de la tige 3 au niveau du bas de jambe de l'utilisateur. Autrement dit la portion haute 12 s'incline peu transversalement, voire pas du tout, par rapport à la portion basse. Cela rend la chaussure 1 bien adaptée à une conduite de ski selon la technique des pas de patineur, grâce au maintien transversal du bas de jambe.

Selon la forme de réalisation proposée le moyen de solidarisation 49 est une articulation. Celle-ci comprend, à titre d'exemple une partie latérale 50 et une partie médiale 51. Ces parties sont des pivots, réalisés par toute technique connue. Afin de donner à la chaussure une plus grande polyvalence et une plus grande facilité d'emploi, l'articulation est démontable. Il en découle que le collier 48 peut être séparé du renfort 33, et donc du reste de la chaussure, ou être remis en place. En conséquence l'utilisateur peut ajuster la rigidité transversale de la chaussure, selon qu'il utilise ou non le collier 48.

Afin de faire gagner du temps lors des opérations de démontage ou de remontage du collier 48 sur le renfort 33, l'invention prévoit que l'articulation peut être démontée et/ou remontée sans outil.

On observe que l'articulation 49 du collier 48 par rapport au renfort 33 se fait selon un axe transversal W de la chaussure. Cela facilite des inclinaisons du collier 48, et de la portion haute 12, dans le sens de la longueur de la chaussure. En conséquence les flexions du bas de jambe par rapport au pied sont plus faciles.

D'une manière générale il est prévu que le contrefort 15 s'étend depuis l'extrémité arrière 5 de la chaussure 1 vers l'extrémité avant 6, de façon que les extrémités avant 25, 27 des parois latérale 17 et médiale 21 soient situées à une distance d comprise entre 40 et 65% de la longueur du semelage 2, la distance d étant mesurée depuis l'extrémité arrière 5 de la chaussure. La valeur de la distance d peut être égale ou différente pour les parois latérale 17 et médiale 21 du contrefort 15. Cette plage de dimensions permet d'ajuster le compromis entre la rigidité de tige au niveau de l'extrémité arrière 5, pour une bonne tenue du talon du pied, et une aptitude à la flexion de la tige vers l'extrémité avant, pour un bon déroulement du pied.

Si dans son ensemble elle est fabriquée à partir de matériaux et selon des techniques de mise en oeuvre connus de l'homme du métier, la chaussure 1 de l'invention fait malgré tout appel à une ou plusieurs opérations spécifiques.

Ainsi, pour la fabrication de la chaussure 1, une étape de référence du procédé consiste à mouler le contrefort talon 15 à l'aide d'un moule qui comprend une base avec une forme, appelée noyau, qui délimite la face intérieure 55 du contrefort 15, ainsi qu'un premier couvercle, appelé coquille, qui délimite la face extérieure 56 du contrefort 15, et une étape successive à l'étape de référence consiste à mouler le renfort 33 au contact du contrefort 15, à l'aide d'un moule qui comprend la base ou noyau qui porte le contrefort 15, ainsi qu'un deuxième couvercle ou coquille substitué au premier, le deuxième couvercle laissant la place pour ajouter le renfort 33. Il faut donc un nombre de pièces réduit pour réaliser le moulage du renfort 33 sur le contrefort 15. Cela permet des économies d'argent et de temps.

Il est prévu par exemple un moulage par injection du contrefort 15 puis du renfort 33, avec des matériaux sélectionnés pour que l'un adhère sur l'autre. Il peut par exemple s'agir de polyuréthane, de polyamide, ou de tout matériau équivalent.

D'une manière large l'invention fait appel à un procédé de fabrication modulaire d'une chaussure 1 qui comprend un semelage 2 et une tige 3, la tige 3 comprenant une enveloppe souple 4, la chaussure 1 comprenant un contrefort 15. Le contrefort 15 est apte à recevoir divers renforts complémentaires 33 de taille et/ou de rigidité spécifiquement adaptées à un usage particulier de la chaussure.

L'invention n'est pas limitée à la forme de réalisation ci-avant décrite, et comprend tous les équivalents techniques pouvant entrer dans la portée des revendications qui vont suivre.

Par exemple, il peut être prévu que ce soit le contrefort qui couvre en partie le renfort.

## Revendications

1. Chaussure (1) comprenant un semelage (2) et une tige (3), la tige (3) comprenant une enveloppe souple (4), la chaussure (1) s'étendant en longueur depuis une extrémité arrière (5) jusqu'à une extrémité avant (6), en largeur entre un côté latéral (7) et un côté médial (8), et en hauteur depuis le semelage (2) jusqu'à une extrémité supérieure (9), la chaussure (1) comprenant un contrefort (15) situé au niveau de l'extrémité arrière (5),
**caractérisée par le fait qu'**elle comprend un renfort (33) qui se superpose en partie au moins au contrefort (15).

2. Chaussure (1) selon la revendication 1, **caractérisée par le fait que** le renfort (33) comprend un arceau (35) qui s'étend le long du côté latéral (7), de l'extrémité arrière (5) et du côté médial (8), au niveau d'une extrémité supérieure (36) du contrefort (15).

3. Chaussure (1) selon la revendication 2, **caractérisée par le fait que** le renfort (33) comprend une extension basse (37, 38, 39) qui prolonge l'arceau (35) vers le semelage (2).

4. Chaussure (1) selon la revendication 2 ou 3, **caractérisée par le fait que** le renfort (33) comprend une patte latérale (37), une patte arrière (38) et une patte médiale (39), les pattes latérale (37), arrière (38) et médiale (39) prolongeant l'arceau (35) vers le semelage (2).

5. Chaussure (1) selon l'une des revendications 1 à 4, **caractérisée par le fait que** le contrefort (15) présente au moins un évidement (41, 42, 43) apte à recevoir le renfort (33).

6. Chaussure (1) selon la revendication 4 ou 5, **caractérisée par le fait que** le contrefort (15) présente une rainure latérale (41) dans laquelle prend place la patte latérale (37), une rainure arrière (42) dans laquelle prend place la patte arrière (38), et une rainure médiale (43) dans laquelle prend place la patte médiale (39).

7. Chaussure (1) selon l'une des revendications 4 à 6, **caractérisée par le fait qu'**une patte (37, 38, 39) s'étend depuis l'arceau (35) jusqu'au semelage (2).

8. Chaussure (1) selon l'une des revendications 1 à 7, **caractérisée par le fait que** le renfort (33) couvre en partie le contrefort (15).

9. Chaussure (1) selon l'une des revendications 1 à 8, **caractérisée par le fait que** le contrefort (15) est constitué par une matière synthétique moulée, et **par le fait que** le renfort (33) est constitué par une matière synthétique moulée.

10. Chaussure (1) selon l'une des revendications 1 à 9, **caractérisée par le fait que** le renfort (33) s'étend vers l'extrémité supérieure (9) de la chaussure (1), au-delà d'une extrémité supérieure (36) du contrefort (15).

11. Chaussure (1) selon l'une des revendications 1 à 10, **caractérisée par le fait que** le renfort (33) comprend une extension latérale haute (44) et une extension médiale haute (45).

12. Chaussure (1) selon l'une des revendications 1 à 11, **caractérisée par le fait qu'**elle comprend un collier (48) relié au renfort (33) par un moyen de solidarisation (49).

13. Chaussure (1) selon la revendication 12, **caractérisée par le fait que** le moyen de solidarisation (49) est une articulation.

14. Chaussure (1) selon la revendication 13, **caractérisée par le fait que** l'articulation (49) du collier (48) par rapport au renfort (33) se fait selon un axe transversal (W) de la chaussure.

15. Chaussure (1) selon l'une des revendications 1 à 14, **caractérisée par le fait que** le contrefort (15) s'étend depuis l'extrémité arrière (5) de la chaussure vers l'extrémité avant (6), de façon que les extrémités avant (25, 27) des parois latérale (17) et médiale (21) soient situées à une distance (d) comprise entre 40 et 65% de la longueur du semelage (2), la distance (d) étant mesurée depuis l'extrémité arrière (5) de la chaussure.

16. Procédé de fabrication modulaire d'une chaussure (1) qui comprend un semelage (2) et une tige (3), la tige (3) comprenant une enveloppe souple (4), la chaussure (1) comprenant un contrefort (15), **caractérisé par le fait que** le contrefort (15) est apte à recevoir divers renforts complémentaires (33) de taille et/ou de rigidité spécifiquement adaptées à un usage particulier de la chaussure (1).

17. Procédé de fabrication d'une chaussure (1) qui comprend un semelage (2) et une tige (3), la tige (3) comprenant une enveloppe souple (4), la chaussure (1) comprenant un contrefort, (15), **caractérisé par le fait qu'**une étape de référence du procédé consiste à mouler le contrefort (15) à l'aide d'un moule qui comprend une base avec une forme qui délimite la face intérieure (55) du contrefort (15), ainsi qu'un premier couvercle qui délimite la face extérieure (56) du contrefort (15), et **par le fait qu'**une étape successive à l'étape de référence consiste à mouler un renfort (33) au contact du contrefort (15), à l'aide d'un moule qui comprend la base qui porte le contrefort (15), ainsi qu'un deuxième couvercle substitué au premier, le deuxième couvercle laissant la place pour ajouter le renfort (33).
